# FASCICULE DE BREVET EUROPEEN

(11) **EP 3 485 165 B1**
(45) Date de publication et mention de la délivrance du brevet: **22.04.2020**
(21) Numéro de dépôt: 17735598.9
(22) Date de dépôt: 11.07.2017
(51) Int. Cl.: F04B 9/103, F04B 13/00, F04B 49/18, F04B 13/02

(54) **MECANISME DE DOSAGE D'UNE POMPE A DOSAGE PROPORTIONNEL, POMPE ET PROCEDE DE MISE EN OEUVRE ASSOCIES**
DOSIERUNGSMECHANISMUS FÜR EINE DOSIERPUMPE SOWIE ZUGEHÖRIGES PUMP- UND VERWENDUNGSVERFAHREN
METERING MECHANISM FOR A PROPORTIONING PUMP, AND ASSOCIATED PUMP AND USAGE METHOD

(30) Priorité: 13.07.2016 FR 1656774
(43) Date de publication de la demande: 22.05.2019
(73) Titulaire: Dosatron International, 33370 Tresses (FR)
(72) Inventeur: DUQUENNOY, Philippe, 33750 Camarsac (FR); MAHIEUX, Richard, 33670 Cursan (FR)
(74) Mandataire: IPAZ
(86) Numéro de dépôt international: PCT/EP2017/067354
(87) Numéro de publication internationale: WO 2018/011185

(56) Documents cités:
- WO-A1-97/33090
- FR-A1- 2 679 964
- FR-A1- 2 681 646

## Description

L'invention est relative à un mécanisme de dosage d'une pompe à dosage proportionnel du type comportant une machine hydraulique alimentée en un liquide principal et en un liquide secondaire, et un mécanisme de dosage du liquide secondaire. L'invention a également pour objet une pompe à dosage proportionnel ainsi qu'un procédé de mise en œuvre d'une telle pompe.

Les pompes à dosage proportionnel comprennent généralement une machine hydraulique. De manière classique, et tel que représenté dans le document de l'art antérieur FR2681646 la machine hydraulique s'étend suivant un axe longitudinal, et est dotée d'une entrée, d'une sortie, d'une tubulure d'accès à une chambre de mélange, ainsi que d'un mécanisme de dosage. Ce mécanisme de dosage est muni d'un clapet d'aspiration et communique en l'une de ses extrémités avec la chambre de mélange intérieure à la machine hydraulique et en l'autre de ses extrémités avec un contenant de produit à aspirer. La machine hydraulique est dotée d'un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage jusque dans la chambre de mélange avec ouverture du clapet d'aspiration lorsque l'organe s'éloigne du mécanisme de dosage puis une expulsion en sortie de la pompe avec fermeture du clapet d'aspiration lorsque l'organe se rapproche du mécanisme de dosage.

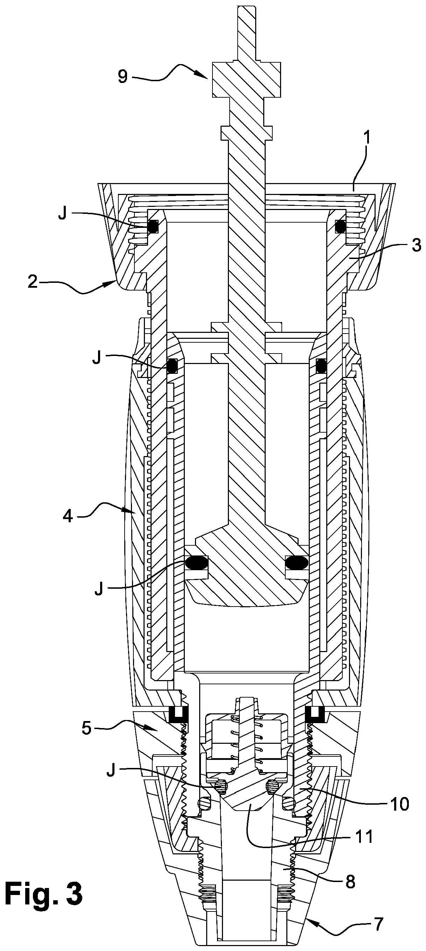

La figure 3 représente en particulier un mécanisme de dosage de l'art antérieur capable d'ajuster le volume aspiré par ledit mécanisme. Ce mécanisme de dosage comprend un corps doseur 10 monté en translation dans une chemise 3 elle-même montée dans une douille de réglage 4, ladite douille de réglage étant apte à coopérer en vissage avec ladite chemise. C'est le vissage et le dévissage de la douille le long de la chemise qui entraîne en translation le corps doseur. Le corps comprend en l'une de ses extrémités un clapet 11 d'obturation et accueille en l'autre de ses extrémités un piston plongeur 9 dont le mouvement alternatif en translation permet une aspiration au niveau de l'extrémité du corps dotée du clapet 11 puis une expulsion dans un volume environnant l'autre extrémité du corps.
Un écrou 2 permet la fixation du mécanisme de dosage sur une tubulure d'accès à une chambre de mélange de la machine hydraulique. Un siège de clapet d'aspiration 8 permet le raccord à un tube plongeant dans un contenant de produit à doser.

Ce type de mécanisme de dosage doit être capable d'assurer une précision de +/- 10% sur toute la gamme de dosage d'une pompe, cette gamme de dosage ayant un rapport de 10 entre le dosage minimum et le dosage maximum. Cette précision doit également être assurée sur toutes les plages de débit et de pression de fonctionnement de la pompe.

Toutefois, ce type de pompe à dosage proportionnel ne permet pas toujours de délivrer la précision exigée pour les raisons qui vont être exposées ci-après.

Tout d'abord, selon les conditions de pression et de débit, la cylindrée d'eau de la partie motrice varie. Cela peut être dû principalement aux courses variables de la machine hydraulique ou bien au temps d'ouverture et de fermeture des soupapes qui diffèrent selon les débits.

Ensuite, l'interruption volontaire de l'aspiration en fin de phase montée pour soulager les efforts d'aspiration ou pour aspirer des volumes variables (i.e. correspondant au dosage souhaité), génère le fait que l'aspiration en phase montée n'est pas proportionnelle à toute la course du piston plongeur.

Pour les mécanismes de dosage actuels, le dimensionnement du corps doseur, principalement son diamètre, s'effectue sur la base de la plus haute valeur de dosage recherchée. Ce diamètre multiplié par la course maximum admissible de la machine hydraulique permet alors de déterminer le volume nécessaire pour délivrer le dosage maximum. Le plus bas dosage de la réglette se déduit donc du dosage maximum.

La précision sur le dosage minimum est difficile à contrôler car la longueur d'aspiration s'approche de l'écart de la course du piston plongeur entre les petits et les grands débits. Pour cette raison, offrir la possibilité d'un rapport de 10 entre le dosage minimum et le dosage maximum impose une précision dégradée sur la plus petite valeur de dosage. Cette précision reste toutefois acceptable pour certaines applications. Par exemple, pour un mécanisme de dosage réglable de 1 à 10% et de débit de 2,5 m3/h, la course de la machine hydraulique est de 60 mm à grand débit et de 54mm à petit débit. Pour le minimum de la réglette, on définit des courses nominales d'aspiration autour de 8 mm. Il faut mettre en regard les 6 mm de différence de la course du piston plongeur sur la plage de débit et les 8 mm d'aspiration disponibles pour les dosages faibles pour approcher une erreur de dosage sur toute la plage de débit. En conséquence, on observe une erreur supérieure à 10% sur toute la plage de débit et de pression sur la position minimum de la réglette.

Pour avoir toutes les valeurs de dosage précises sur un doseur 1 à 10%, qu'il n'est donc pas possible d'obtenir avec un seul corps doseur, il a fallu trouver un moyen d'adapter le diamètre du corps doseur pour récupérer de la précision sur toutes les valeurs de dosage de la réglette, même la plus faible.

C'est pourquoi, l'objet de l'invention est de palier tout ou partie des inconvénients énoncés précédemment en proposant un mécanisme de dosage permettant d'obtenir avec précision toutes les valeurs de dosage, et ce, notamment dans la gamme de dosage allant de 1 à 10%. Pour ce faire, il est nécessaire d'avoir recours à deux sous-ensembles de dosage de diamètre différent, le plus petit permettant de couvrir le début de la gamme correspondant alors à de faible dosage et le plus grand permettant de couvrir le reste de la gamme correspondant à des dosages plus élevés. Pour ce faire, il est également nécessaire de pouvoir activer l'un ou l'autre des sous-ensembles de dosage selon la gamme de dosage choisie.

Plus particulièrement, l'invention a pour objet un mécanisme de dosage comprenant un corps doseur monté en translation dans une chemise elle-même montée dans une douille de réglage, ladite douille de réglage étant apte à coopérer en vissage avec ladite chemise, le vissage/dévissage entraînant en translation le corps doseur, ledit corps étant dotée en l'une de ses extrémité d'un clapet d'obturation et accueillant en l'autre de ses extrémités un piston plongeur dont le mouvement alternatif en translation permet une aspiration au niveau de l'extrémité du corps dotée du clapet puis une expulsion dans un volume environnant l'autre extrémité du corps via un passage pratiqué dans au moins une étanchéité,
- le corps doseur comportant un premier cylindre central et un deuxième cylindre périphérique, concentriques et solidaires entre eux,
- le piston plongeur étant solidaire d'une première et d'une deuxième étanchéité montées respectivement en appui contre le premier et le deuxième cylindres, de sorte qu'il se créé une zone de dépression à l'intérieur respectivement du premier et du deuxième cylindres, lorsque la première et la deuxième étanchéité J1; s'éloignent de l'extrémité du corps dotée du clapet,
- la zone de dépression du premier cylindre central pouvant être mise en communication avec la zone de dépression du deuxième cylindre périphérique, et, la zone de dépression du deuxième cylindre périphérique pouvant être mise en communication avec le volume environnant l'extrémité du corps opposée à celle dotée du clapet,
- le mécanisme de dosage comprenant un sélecteur monté sur le premier cylindre central et mobile par rapport à ce dernier suivant une course délimitée par une première position dans laquelle la communication entre les zones de dépression des premier et deuxième cylindres est coupée tandis que la communication entre la zone de dépression du deuxième cylindre et le volume environnant l'extrémité du corps opposée à celle dotée du clapet est ouverte, et une deuxième position dans laquelle la communication entre les zones de dépression des premier et deuxième cylindres est ouverte tandis que la communication entre la zone de dépression du deuxième cylindre et le volume environnant l'extrémité du corps opposée à celle dotée du clapet est coupée.

Des caractéristiques optionnelles de l'invention, complémentaires ou de substitution sont énoncées ci-après.

Selon un certain mode de réalisation, la communication permettant l'expulsion dans le volume environnant l'extrémité du corps opposée à celle dotée du clapet peut être réalisée au moins au niveau de la deuxième étanchéité ladite étanchéité étant un joint rendu passant lorsque le piston plongeur se rapproche du clapet.

Selon une variante, la communication permettant l'expulsion dans le volume environnant l'extrémité du corps opposée à celle dotée du clapet peut être réalisée au moins au niveau d'un joint à lèvre monté sur le piston plongeur, ledit joint étant passant lorsque le piston plongeur se rapproche du clapet.

Selon une autre variante, la communication permettant l'expulsion dans le volume environnant l'extrémité du corps opposée à celle dotée du clapet peut être complétée au moins au niveau d'un joint à lèvre monté sur le piston plongeur, ledit joint étant passant lorsque le piston plongeur se rapproche du clapet.

Selon un mode de réalisation particulier, le piston plongeur peut comprendre une tige prolongée par un troisième cylindre intercalé entre le premier cylindre central et le deuxième cylindre périphérique, la deuxième étanchéité étant montée sur la surface circonférentielle extérieure du troisième cylindre.

Selon un autre mode de réalisation particulier, la première étanchéité peut être montée sur la surface circonférentielle intérieure du troisième cylindre.

Selon une variante, la première étanchéité peut être montée sur un prolongement de la tige du piston plongeur de manière à venir en appui contre la surface circonférentielle intérieure du premier cylindre central.

Selon un mode de réalisation particulier, la communication entre la zone de dépression du deuxième cylindre périphérique et le volume environnant l'extrémité du corps opposée à celle dotée du clapet, peut être réalisée par au moins un canal creusé dans l'épaisseur du deuxième cylindre périphérique et reliant ladite zone de dépression et ledit volume.

Selon une variante, la communication entre la zone de dépression du deuxième cylindre périphérique et le volume environnant l'extrémité du corps opposée à celle dotée du clapet, peut être réalisée par l'interstice délimité par deux tubes emboîtés constituant le deuxième cylindre périphérique.

Selon un mode de réalisation particulier, la communication entre les zones de dépression des premier et deuxième cylindres, peut être réalisée avec au moins une lumière percée dans l'épaisseur du premier cylindre central.

Selon un mode particulier de réalisation, la première et la deuxième position bornant la course du sélecteur peuvent être respectivement définies par des surfaces de butées ménagées sur des moyens de blocage de la douille de réglage et un écrou d'assemblage.

Selon un mode de réalisation particulier, le sélecteur peut être monté en translation le long du premier cylindre central et peut être un écrou coopérant en vissage/dévissage avec une zone filetée réalisée sur la surface circonférentielle extérieure du premier cylindre central,
- de sorte que la première position dans laquelle la communication entre les zones de dépression des premier et deuxième cylindres est coupée tandis que la communication entre la zone de dépression du deuxième cylindre et le volume environnant l'extrémité du corps opposée à celle dotée du clapet est ouverte, correspond à la position vissée de l'écrou,
- et de sorte que la deuxième position dans laquelle la communication entre les zones de dépression des premier et deuxième cylindres est ouverte tandis que la communication entre la zone de dépression du deuxième cylindre et le volume environnant l'extrémité du corps opposée à celle dotée du clapet est coupée, correspond à la position dévissée de l'écrou.

En variante, le sélecteur peut être une bague montée suivant une liaison glissière sur le premier cylindre central.

Encore en variante, le sélecteur peut être un dispositif comprenant une soupape et un joint commandés manuellement par la rotation d'une bague suivant une course s'étendant de préférence sur un demi-tour, ladite soupape mettant en communication à l'une des extrémités de la course les zones de dépression des premier et deuxième cylindres tandis que le joint ferme la communication entre la zone de dépression du deuxième cylindre et le volume environnant l'extrémité du corps opposée à celle dotée du clapet, ladite bague inversant les mises en communication à l'autre extrémité de sa course.

Encore en variante, le sélecteur peut être un dispositif comprenant un tiroir hydraulique en translation, une fente et un joint, le tiroir mettant en communication à l'une des extrémités de sa course les zones de dépression des premier et deuxième cylindres via la fente tandis que le joint ferme la communication entre la zone de dépression du deuxième cylindre et le volume environnant l'extrémité du corps opposée à celle dotée du clapet, ledit tiroir inversant les mises en communication à l'autre extrémité de sa course.Selon un perfectionnement, le sélecteur comporte sur sa surface extérieure un premier marquage et un deuxième marquage correspondant respectivement à la première et à la deuxième position bornant la course du sélecteur.

Dans le cas où le sélecteur comporte sur sa surface extérieure un premier marquage et un deuxième marquage, le premier marquage et/ou le deuxième marquage peut(vent) être associé(s) à des moyens de détection de manière à déterminer dans quelle position se trouve le sélecteur.

L'invention a également pour objet une pompe à dosage proportionnel comprenant une machine hydraulique dotée d'une entrée et d'une sortie, d'un mécanisme de dosage communiquant en l'une de ses extrémités avec une tubulure d'accès à une chambre de mélange intérieure à la pompe et en l'autre de ses extrémités avec un réservoir de produit à doser, la machine hydraulique s'étendant suivant un axe longitudinal et renfermant un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage jusque dans la chambre de mélange avec ouverture d'un clapet d'aspiration lorsque l'organe s'éloigne du mécanisme de dosage puis une expulsion en sortie de la pompe avec fermeture du clapet d'aspiration lorsque l'organe se rapproche du mécanisme de dosage, caractérisée en ce que le mécanisme de dosage est conforme à un mode de réalisation de l'invention.

L'invention a également pour objet un procédé de mise en œuvre d'une pompe à dosage proportionnel selon un mode de réalisation de l'invention, le sélecteur comportant sur sa surface extérieure un premier et un deuxième marquages correspondant respectivement à la première et à la deuxième position bornant la course du sélecteur, elles même correspondant respectivement à des valeurs de dosage comprises entre X% et Y% et à des valeurs de dosage comprises entre Y% et Z%, Y étant compris entre X et Z, la chemise du mécanisme de dosage comportant une graduation correspondant à des valeurs de dosage, caractérisé en ce que le procédé comprend :
- une étape de sélection de la plage de dosage X% - Y% ou Y% - Z% en positionnant le sélecteur dans l'une ou l'autre des première et deuxième positions bornant la course du sélecteur,
- puis une étape de sélection de la valeur de dosage, en réglant la douille sur le dosage choisi.

D'autres avantages et particularités de l'invention apparaîtront à la lecture de la description détaillée de mises en œuvre et de modes de réalisation nullement limitatifs, et des dessins annexés suivants :
- la FIGURE 1 est une représentation schématique d'une pompe à dosage proportionnel utilisant un premier type de machine hydraulique.
- la FIGURE 2 est une représentation schématique d'une pompe à dosage proportionnel utilisant un deuxième type de machine hydraulique.
- la FIGURE 3 est une représentation d'une vue détaillée d'un mécanisme de dosage de l'art antérieur.
- la FIGURE 4a est un schéma de principe de l'invention.
- la FIGURE 4b est une vue suivant une coupe longitudinale d'un mode de réalisation d'un mécanisme de dosage selon l'invention.
- la FIGURE 5 est une vue éclatée d'un mécanisme de dosage selon la figure 4b.
- la FIGURE 6a est une vue éclatée d'un détail d'un mécanisme de dosage selon la figure 4b.
- la FIGURE 6b est une vue éclatée d'un détail d'un mécanisme de dosage selon la figure 4b.
- la FIGURE 6c est une vue éclatée d'un détail d'un mécanisme de dosage selon la figure 4b.
- la FIGURE 7a est une vue suivant une coupe longitudinale d'un mécanisme de dosage selon la figure 4b dans un mode de fonctionnement dédié aux faibles dosages.
- la FIGURE 7b est une vue détaillée de la figure 7a.
- la FIGURE 8a est une vue suivant une coupe longitudinale d'un mécanisme de dosage selon la figure 4b dans un mode de fonctionnement dédié aux dosages élevés.
- la FIGURE 8b est une vue détaillée de la figure 8a.
- la FIGURE 9 représente une courbe rassemblant les résultats obtenus.
- les FIGURES 10a, 10b sont des vues suivant une coupe longitudinale d'un détail d'un mécanisme de dosage suivant un mode de réalisation.

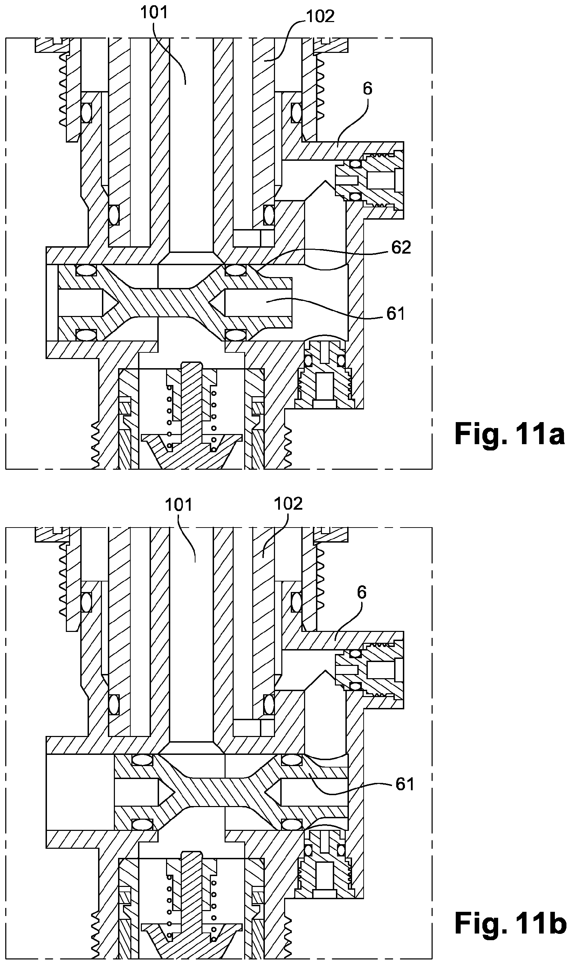

les FIGURES 11a, 11b sont des vues suivant une coupe longitudinale d'un détail d'un mécanisme de dosage suivant un autre mode de réalisation.Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

A des fins de concision et de clarté, les éléments portent les mêmes références sur les différentes figures.

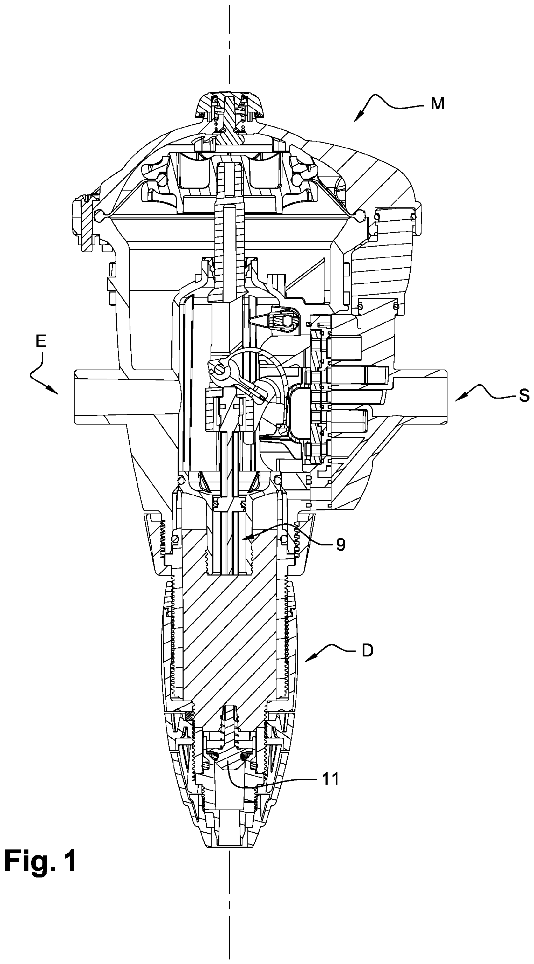

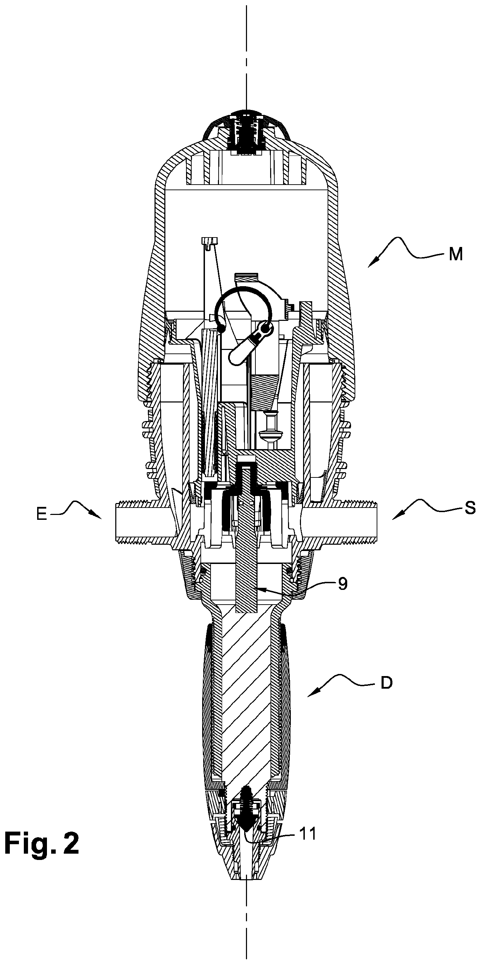

Tel que représenté sur les figures 1 et 2, un des objets de l'invention est une pompe à dosage proportionnel comprenant une machine hydraulique M dotée d'une entrée E et d'une sortie S, et intégrant un mécanisme de dosage D particulier, communiquant en l'une de ses extrémités avec une tubulure 1 d'accès à une chambre de mélange intérieure à la pompe et en l'autre de ses extrémités avec un réservoir de produit à doser.

La machine hydraulique s'étend suivant un axe longitudinal Z et renferme un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage D jusque dans la chambre de mélange avec ouverture d'un clapet d'aspiration 11 lorsque l'organe s'éloigne du mécanisme de dosage puis une expulsion en sortie de la pompe avec fermeture du clapet d'aspiration lorsque l'organe se rapproche du mécanisme de dosage.

Les figures 1 et 2 représentent chacune un mode de réalisation d'une pompe à dosage proportionnel. Elle comporte une machine hydraulique M s'étendant suivant un axe longitudinal, et dotée d'une entrée E, d'une sortie S, une tubulure d'accès à une chambre de mélange, ainsi que d'un mécanisme de dosage D. Ce mécanisme de dosage est muni d'un clapet d'aspiration 11 et communique en l'une de ses extrémités avec une chambre de mélange intérieure à la pompe et en l'autre de ses extrémités avec un contenant de produit à aspirer (non représenté sur la figure).

La machine hydraulique est doté d'un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage jusque dans la chambre de mélange avec ouverture du clapet d'aspiration lorsque l'organe s'éloigne du mécanisme de dosage puis une expulsion en sortie de la pompe avec fermeture du clapet d'aspiration lorsque l'organe se rapproche du mécanisme de dosage.

La machine hydraulique peut être du type de celui décrit dans le document EP1971776 A1 et représenté sur la figure 1.

Cette machine hydraulique comprend une enveloppe comportant un corps et un couvercle, un moyen de séparation propre à effectuer un mouvement alternatif dans l'enveloppe entre le corps et le couvercle, ce moyen de séparation définissant deux chambres. La machine hydraulique comprend aussi des moyens de commutation hydraulique pour l'alimentation en liquide et l'évacuation des chambres précitées.

Ces moyens de commutation comprennent un organe de distribution pouvant prendre deux positions stables et commandé par les déplacements du moyen de séparation. Le corps de l'enveloppe renferme par ailleurs un compartiment relié à une arrivée de liquide sous pression et dans lequel sont logés les moyens de commutation, ainsi que des moyens de déclenchement comprenant un poussoir lié au moyen de séparation, propres à provoquer, en fin de course, un changement brusque de la position des moyens de commutation, sous l'action d'un moyen élastique, pour l'inversion de la course.

L'organe de distribution comprend un tiroir de distribution appliqué contre une plaque plane fixe relativement au corps de l'enveloppe, le tiroir de distribution pouvant coulisser de manière étanche, sans joint, contre la plaque qui comporte des orifices reliés respectivement aux chambres de l'enveloppe et à un orifice de sortie du liquide. Le tiroir est alors prévu pour, selon sa position, fermer certains des orifices ou les mettre en communication avec l'arrivée de fluide ou avec l'échappement.

La machine hydraulique peut être aussi du type de celui décrit dans le document EP1971774 A1 et représenté sur la figure 2.

Dans ce cas, la machine hydraulique comprend une enveloppe, un piston propre à coulisser en mouvement alternatif dans l'enveloppe, le piston séparant l'enveloppe en deux chambres, des moyens de commutation hydraulique pour l'alimentation en liquide et l'évacuation des chambres séparées par le piston.

Ces moyens de commutation sont commandés par les déplacements du piston et comportent au moins une biellette agissant sur un organe de distribution pouvant prendre deux positions stables. Il est en outre prévu des moyens de déclenchement comprenant un poussoir propre à provoquer, en fin de course du piston, un changement brusque de la position des moyens de commutation, sous l'action d'un moyen élastique, pour l'inversion de la course. Le moyen élastique est solidaire, à chacune de ses extrémités, d'un organe d'articulation reçu respectivement dans un logement prévu sur la biellette et sur une autre pièce mobile de la machine hydraulique, chaque logement étant ouvert suivant une direction sensiblement opposée au sens de l'effort exercé par le moyen élastique dans le logement, de sorte que chaque organe d'articulation peut être extrait de son logement ouvert à l'encontre dudit effort.

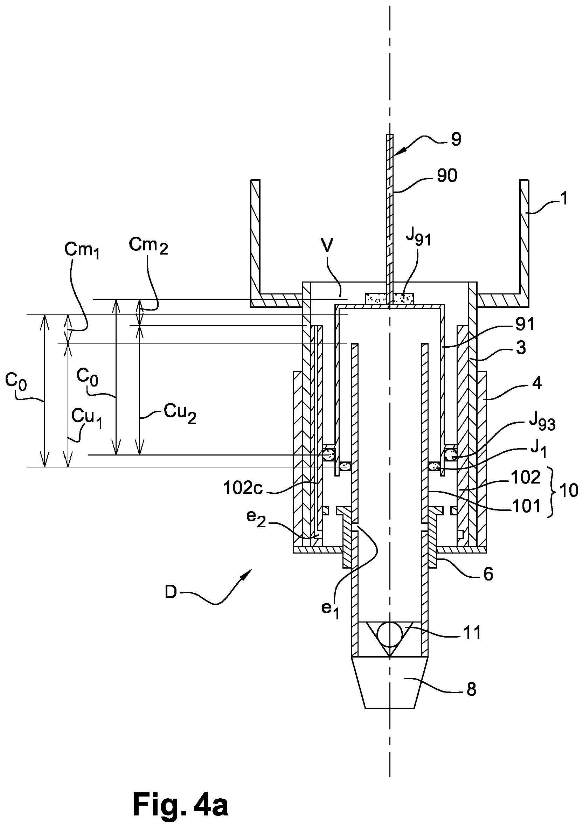

L'invention a également pour objet un mécanisme de dosage tel que représenté sur la figure 4a illustrant son principe. Le mécanisme de dosage comprend un corps doseur 10 monté en translation dans une chemise 3 elle-même montée dans une douille de réglage 4. La douille de réglage est apte à coopérer en vissage avec la chemise, de sorte que le vissage et le dévissage entraînent en translation le corps doseur. On entend par vissage un déplacement dans un espace affine euclidien qui est la composée commutative d'une rotation et d'une translation selon un vecteur dirigeant l'axe de rotation (en l'occurrence l'axe longitudinal). Ainsi, la coopération en vissage de deux pièces doit être entendue au sens large et ne doit pas se limiter à la seule coopération de filetage entre les deux pièces.

Le corps doseur est doté en l'une de ses extrémités d'un clapet 11 d'obturation prolongé par un bec 8 destinée à aspirer le produit à doser et accueillant en l'autre de ses extrémités un piston plongeur 9 dont le mouvement alternatif en translation permet une aspiration au niveau de l'extrémité du corps doseur dotée du clapet 11 puis une expulsion dans un volume V environnant l'autre extrémité du corps via un passage qui peut être pratiqué dans au moins une étanchéité J91, J1, J93.

Le corps doseur comporte un premier cylindre central 101 et un deuxième cylindre périphérique 102 concentriques et solidaires entre eux.

Le piston plongeur est solidaire d'une première étanchéité J1 et d'une deuxième étanchéité J93 montées respectivement en appui contre le premier cylindre et le deuxième cylindre. De cette manière, il se créé une zone de dépression à l'intérieur respectivement du premier et du deuxième cylindres, lorsque la première et la deuxième étanchéité J1, J93 s'éloignent de l'extrémité du corps dotée du clapet.

La zone de dépression du premier cylindre central est capable de communiquer avec la zone de dépression du deuxième cylindre périphérique au moyen d'une communication e1. Cette communication e1 peut être réalisée sous la forme d'une ou plusieurs lumières pratiquées dans la paroi du premier cylindre central.

De même, la zone de dépression du deuxième cylindre périphérique est capable de communiquer avec le volume V environnant l'extrémité du corps opposée à celle dotée du clapet, au moyen d'une communication e2. Cette communication e2 peut être réalisée sous différentes formes qui font l'objet de modes de réalisation exposés plus loin dans la description.

Le mécanisme de dosage comprenant un sélecteur 6 en translation le long du premier cylindre central suivant une course délimitée par une première position et une deuxième position.

Dans la première position, la communication e1 entre les zones de dépression des premier et deuxième cylindres est coupée tandis que la communication e2 entre la zone de dépression du deuxième cylindre et le volume environnant l'extrémité du corps opposée à celle dotée du clapet est ouverte.

Dans la deuxième position, la communication e1 entre les zones de dépression des premier et deuxième cylindres est ouverte tandis que la communication e2 entre la zone de dépression du deuxième cylindre et le volume environnant l'extrémité du corps opposée à celle dotée du clapet est coupée.

Le passage permettant l'expulsion dans le volume environnant l'extrémité du corps opposée à celle dotée du clapet est réalisée au moins au niveau d'une étanchéité.

Concernant maintenant la cinématique du mécanisme de dosage et tel que schématisé en figure 4a, le piston plongeur admet une course de longueur totale égale à C0. Bien entendu, la première étanchéité J1 et la deuxième étanchéité J93 admettent aussi une course de longueur totale C0 puisqu'elles sont solidaires du piston plongeur 9. Toutefois, de manière à soulager l'effort de pompage et le frottement des joints sur les parois des cylindres, ces étanchéités J1 et J93 admettent une course Cu1, Cu2 respectivement en contact avec le premier cylindre 101 et le deuxième cylindre 102, suivi d'une course respectivement Cm1, Cm2, dépourvue de contact, qui correspond au « déjantage » des joints J1 et J93.

Ainsi, Cu1 + Cm1 = Cu2 + Cm2 = C0.

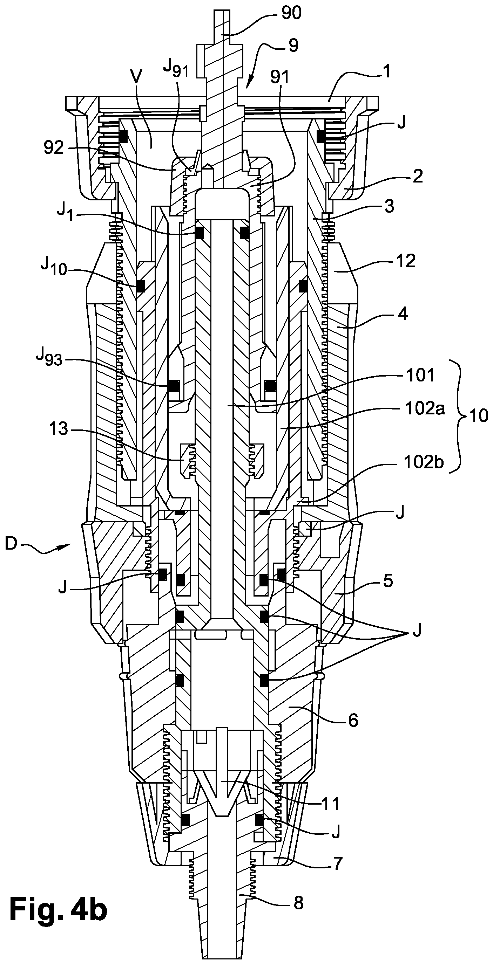

Selon un mode de réalisation représentée sur la figure 4b, la communication permettant l'expulsion dans le volume V environnant l'extrémité du corps opposée à celle dotée du clapet est réalisée au niveau d'un joint à lèvre J91 monté sur le piston plongeur 9, ledit joint étant passant lorsque le piston plongeur se rapproche du clapet. Cette communication est aussi réalisée via la deuxième étanchéité J93, celle-ci étant un joint rendu passant lorsque le piston plongeur se rapproche du clapet.

On entend par joint passant, un joint qui s'ouvre après une augmentation de pression dans le volume que le joint obture. Ce type de joint fait office de clapet. Il peut être réalisé en élastomère par un joint à lèvre, un clapet à ombrelle, un clapet à bec de canard, ou sur des réalisations plus standard de clapets tels que les clapets à bille, les clapets à pointeau, avec ou sans ressort de pré-charge.

Selon encore d'autres configurations de réalisation non représentées, l'expulsion peut aussi se faire suivant des modalités différentes.

Ainsi, l'expulsion dans le volume V pourrait se faire via joint à lèvre J91 monté sur le piston plongeur 9 et via la première étanchéité J1 puis la deuxième étanchéité J93, celles-ci étant chacune des joints rendus passants lorsque le piston plongeur se rapproche du clapet. En revanche, la première étanchéité J1 resterait étanche lorsque le piston plongeur se rapproche du clapet.

En variante, l'expulsion dans le volume V pourrait se faire via joint à lèvre J91 monté sur le piston plongeur 9 et via la première étanchéité J1, celle-ci étant aussi un joint rendu passant lorsque le piston plongeur se rapproche du clapet. En revanche, la deuxième étanchéité J93 resterait étanche lorsque le piston plongeur se rapproche du clapet.

Suivant une autre configuration encore, il n'est pas nécessaire de recourir au joint à lèvre J91 monté sur le piston plongeur 9. Dans ce cas, l'expulsion dans le volume V se fait via la première étanchéité J1 puis la deuxième étanchéité J93, celles-ci étant chacune des joints rendus passants lorsque le piston plongeur se rapproche du clapet.

Tel que représenté sur la figure 4b, le piston plongeur comprend une tige 90 prolongée par un troisième cylindre 91 intercalé entre le premier cylindre central 101 et le deuxième cylindre périphérique 102. Dans cette configuration, la première étanchéité J1 est montée sur la surface circonférentielle intérieure du troisième cylindre 91, et la deuxième étanchéité J93 est montée sur la surface circonférentielle extérieure du troisième cylindre 91.

Bien entendu, d'autres modes de réalisation sont envisageables. Ainsi, la première étanchéité J1 peut être montée sur un prolongement de la tige 90 du piston plongeur de manière à venir en appui contre la surface circonférentielle intérieure du premier cylindre central 101.

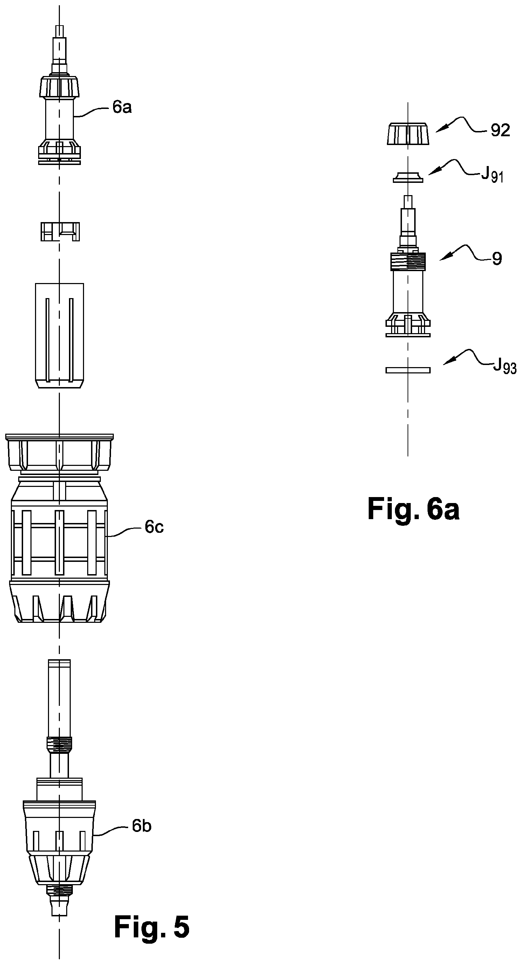

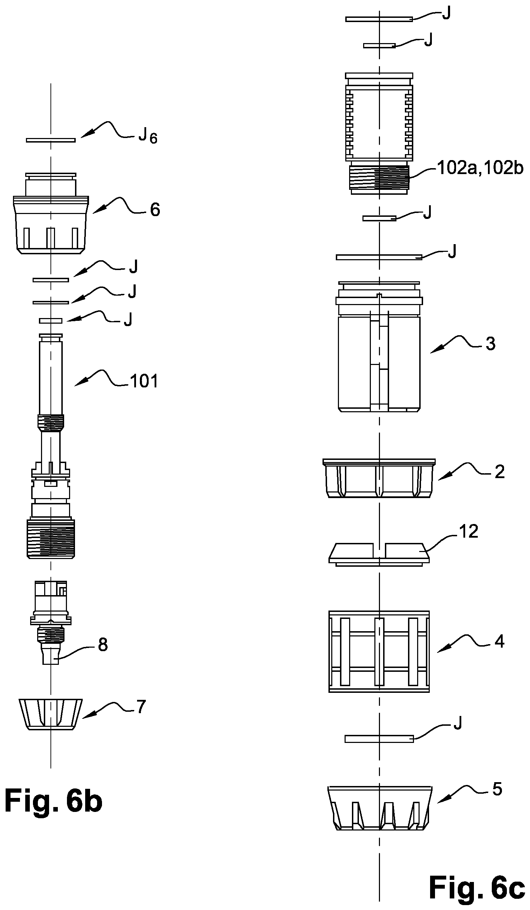

Suivant un aspect de l'invention, la figure 5 définit un mécanisme de dosage qui repose sur trois sous-ensembles représentés respectivement sous les références et en figures 6a, 6b, 6c.

Le sous-ensemble 6a regroupe le piston plongeur 9 avec les joints J91 et J93, pour une utilisation du corps doseur dans la plage de dosages élevés.

Le sous-ensemble 6b regroupe le sélecteur 6 monté de manière étanche moyennant des joints J sur le bec 8 et le bas du premier cylindre central 101, et ce, pour une utilisation du corps doseur dans la plage de dosages faibles.

Le sous-ensemble 6c regroupe le deuxième cylindre périphérique 102 monté dans la chemise 3, elle-même montée dans la douille de réglage 4.

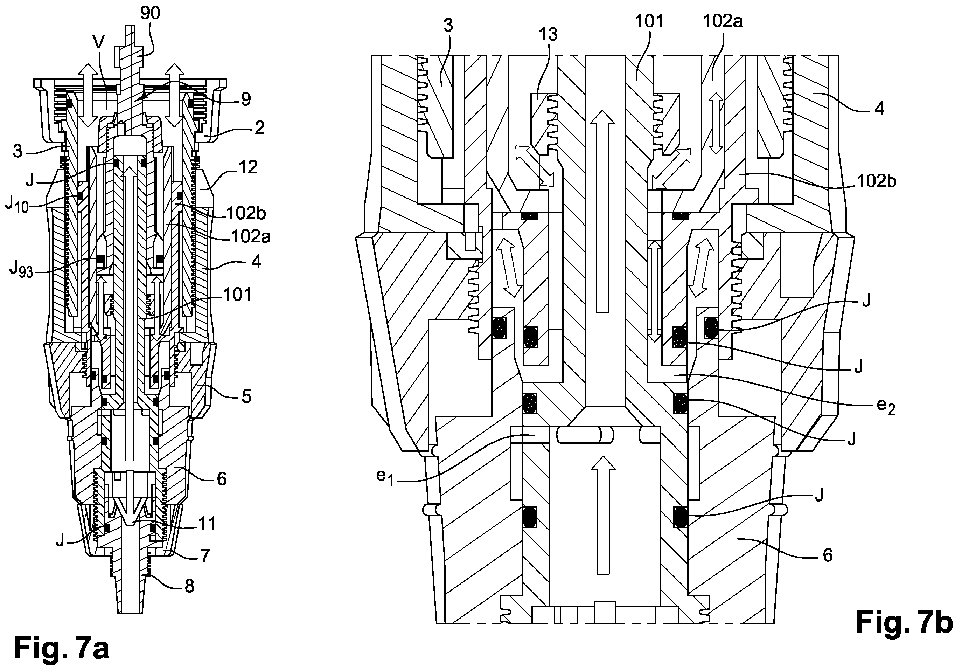

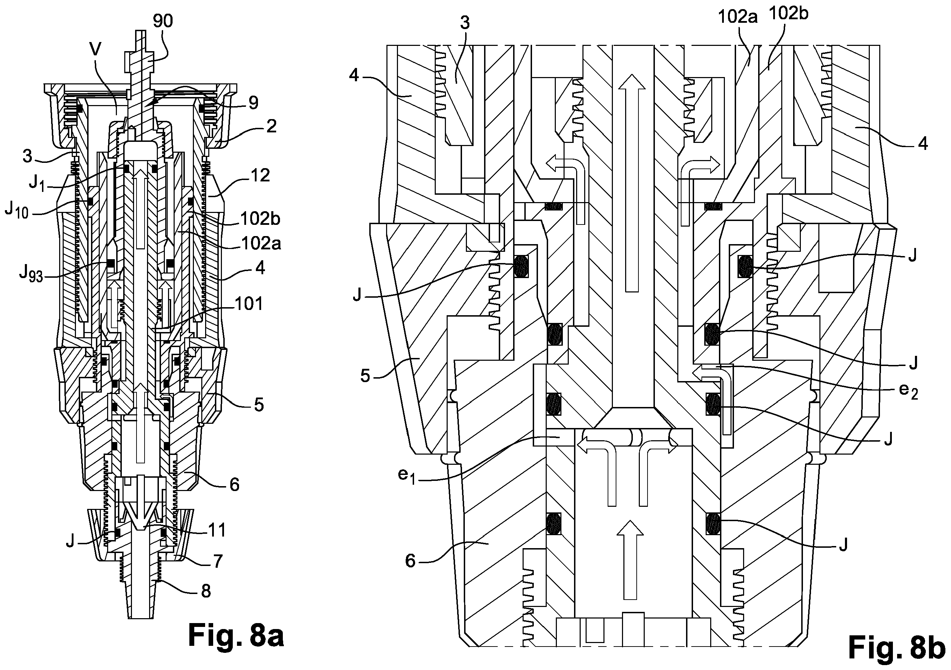

Tel que représenté sur les figures 7a, 7b, 8a et 8b, La communication e1 entre les zones de dépression des premier et deuxième cylindres, est réalisée avec au moins une lumière percée dans l'épaisseur du premier cylindre central. La communication e2 entre la zone de dépression du deuxième cylindre périphérique et le volume environnant l'extrémité du corps opposée à celle dotée du clapet, est réalisée par l'interstice délimité par deux tubes emboîtés 102a, 102b constituant le deuxième cylindre périphérique 102. Un joint J10 forme l'étanchéité entre le tubes 102b et la chemise 3.

Selon un autre mode de réalisation représenté partiellement en figure 4a, la communication e2 entre la zone de dépression du deuxième cylindre périphérique et le volume environnant l'extrémité du corps opposée à celle dotée du clapet, pourrait être réalisée par au moins un canal 102c creusé dans l'épaisseur du deuxième cylindre périphérique et reliant ladite zone de dépression et ledit volume. Dans ce cas, le deuxième cylindre périphérique 102 peut ne former qu'une seule et même pièce en ce sens qu'il n'est plus constitué par deux tubes emboîtés 102a, 102b puisqu'aucun interstice est nécessaire.

Tel que représenté sur les figures 7a, 7b, 8a et 8b, les première et la deuxième positions bornant la course du sélecteur sont respectivement définies par des surfaces de butées ménagées sur des moyens de blocage 5 de la douille de réglage 4 et un écrou 7 assemblant le bec 8 avec le corps doseur 101.

Dans le mode de réalisation décrit en figures 4b, 5, 6a, 6b, 6c, 7a, 7b, 8a et 8b, le sélecteur 6 est un écrou coopérant en vissage/dévissage avec une zone filetée réalisée sur la surface circonférentielle extérieure du premier cylindre central.

La position où l'écrou 6 est vissé contre les moyens de blocage 5 de la douille de réglage 4, correspond à une configuration dans laquelle la communication e1 entre les zones de dépression des premier et deuxième cylindres est coupée tandis que la communication e2 entre la zone de dépression du deuxième cylindre et le volume environnant l'extrémité du corps opposée à celle dotée du clapet est ouverte.

La position où l'écrou 6 est dévissé contre l'écrou 7 assemblant le bec 8 avec le corps doseur 101, correspond à une configuration dans laquelle la communication e1 entre les zones de dépression des premier et deuxième cylindres est ouverte tandis que la communication e2 entre la zone de dépression du deuxième cylindre et le volume environnant l'extrémité du corps opposée à celle dotée du clapet est coupée.

Suivant une variante non représentée, le sélecteur 6 pourrait tout aussi bien être une bague montée suivant une liaison glissière sur le premier cylindre central 101. L'Homme du Métier saura prévoir et définir des moyens d'arrêt du sélecteur en chacune des positions bornant sa course.

Suivant une autre variante encore non représentée, le mouvement du sélecteur 6 pourrait tout aussi s'effectuer au moyen d'une came.

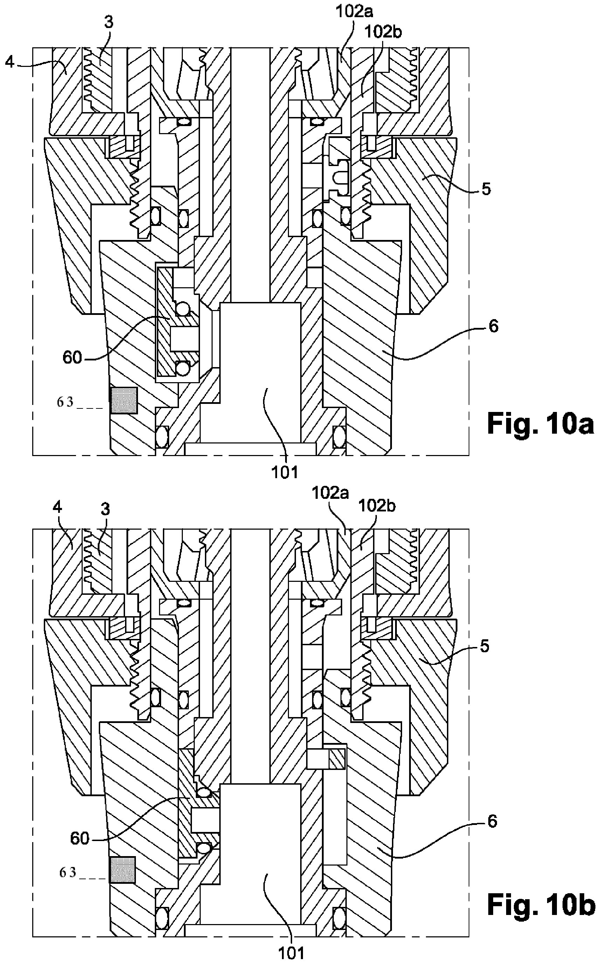

Suivant une autre variante et tel que représenté sur les figures 10a et 10b, le sélecteur 6 pourrait être un dispositif comprenant une soupape (60) et un joint commandés manuellement par la rotation d'une bague sur suivant une course s'étendant de préférence sur un demi-tour, ladite soupape mettant en communication à l'une des extrémités de la course les zones de dépression des premier et deuxième cylindres tandis que le joint ferme la communication entre la zone de dépression du deuxième cylindre et le volume environnant l'extrémité du corps opposée à celle dotée du clapet, ladite bague inversant les mises en communication à l'autre extrémité de sa course.

Sur la figure 10a, la communication e1 entre les zones de dépression des premier et deuxième cylindres est ouverte car la soupape est ouverte. La communication e2 entre la zone de dépression du deuxième cylindre et le volume environnant l'extrémité du corps opposée à celle dotée du clapet est en revanche fermée. Ainsi La circulation de l'eau provenant de la machine hydraulique est coupée par le joint qui obture le passage.

Sur la figure 10b, c'est l'inverse. La communication entre les deux zones de dépression est fermée (soupape fermée). La circulation de l'eau provenant de la machine hydraulique vers la zone d'aspiration est ouverte, le joint n'obture plus le passage.

Suivant une autre variante, le sélecteur 6 pourrait être un dispositif comprenant un tiroir hydraulique 61 en translation, une fente 62 et un joint, le tiroir mettant en communication à l'une des extrémités de sa course les zones de dépression des premier et deuxième cylindres via la fente tandis que le joint ferme la communication entre la zone de dépression du deuxième cylindre et le volume environnant l'extrémité du corps opposée à celle dotée du clapet, ledit tiroir inversant les mises en communication à l'autre extrémité de sa course.

Sur la figure 11b, la communication e1 entre les zones de dépression des premier et deuxième cylindres est ouverte. La communication e2 entre la zone de dépression du deuxième cylindre et le volume environnant l'extrémité du corps opposée à celle dotée du clapet est en revanche fermée. Ainsi, Le tiroir obture la fente et l'eau ne peut plus circuler depuis la machine hydraulique et passer à travers la fente. De cette façon, l'aspiration induite dans les zones de dépression des premier et deuxième cylindres appelle le produit à doser.

Sur la figure 11a, c'est l'inverse. La communication entre les deux zones de dépression est fermée (soupape fermée). La circulation de l'eau provenant de la machine hydraulique vers la zone d'aspiration est ouverte. Le tiroir ouvre la fente et l'eau peut circuler depuis la machine hydraulique et passer à travers la fente. De manière à faciliter l'utilisation du mécanisme de dosage, le sélecteur comporte sur sa surface extérieure un premier et un deuxième marquages, aisément déchiffrables par l'utilisateur, et correspondant respectivement à la première et à la deuxième position bornant la course du sélecteur.

Le procédé de mise en œuvre d'une pompe à dosage proportionnel selon l'invention va maintenant être détaillé.

Dans un premier temps, il convient de sélectionner la plage de dosage X% - Y% ou Y% - Z% en positionnant le sélecteur dans l'une ou l'autre des première et deuxième positions bornant la course du sélecteur.

De manière avantageuse, le sélecteur comporte sur sa surface extérieure un premier et un deuxième marquages correspondant respectivement à la première et à la deuxième position bornant la course du sélecteur, elles même correspondant respectivement à des valeurs de dosage comprises entre X% et Y% et à des valeurs de dosage comprises entre Y% et Z%, Y étant compris entre X et Z.

De plus et avantageusement, la chemise 3 du mécanisme de dosage comporte aussi une graduation correspondant à des valeurs de dosage.

Ensuite, vient une étape de sélection de la valeur de dosage, en réglant la douille 4 sur le dosage choisi.

Dans le cas où le sélecteur est positionné sur de faibles dosages X% - Y% et en référence aux figures 7a et 7b, le sélecteur 6 se trouve dans la position selon laquelle la communication e1 entre les zones de dépression des premier et deuxième cylindres est coupée tandis que la communication e2 entre la zone de dépression du deuxième cylindre et le volume environnant l'extrémité du corps opposée à celle dotée du clapet est ouverte.

La zone de dépression du premier cylindre central ne communique pas avec la zone de dépression du deuxième cylindre périphérique. En revanche, la zone de dépression du deuxième cylindre périphérique communique avec le volume V environnant l'extrémité du corps opposée à celle dotée du clapet.

Lorsque le piston plongeur monte, les joints de dosage J1 et J93 étant étanches lorsqu'ils s'éloignent du clapet, le joint J1 active la zone de dépression du premier cylindre en abaissant la pression, ce qui génère une aspiration du produit de dosage. De manière concomitante, le joint J93 active la zone de dépression du deuxième cylindre en abaissant la pression, ce qui génère une aspiration de l'eau circulant au travers de la machine hydraulique M jusque dans la zone de dépression du deuxième cylindre, et ce, à travers l'interstice délimité par les deux tubes emboîtés 102a, 102b. Rappelons en effet que le mécanisme de dosage, dont le volume V environnant l'extrémité du corps opposée à celle dotée du clapet, communique avec la partie motrice.

Lorsque le piston plongeur descend, le joint J93 devient passant, permettant ainsi au produit de dosage et à l'eau de le traverser et d'accéder au volume V. Concernant le volume de produit de dosage contenu à l'intérieur du premier cylindre central, soit il traverse le joint J1 devenu passant et traverse aussi le joint en V J91, soit il ne traverse que le joint en V J91, le joint J1 restant étanche.

Dans le cas où le sélecteur est positionné sur des dosages plus élevés Y% - Z% et en référence aux figures 8a et 8b, le sélecteur 6 se trouve dans la position selon laquelle la communication e1 entre les zones de dépression des premier et deuxième cylindres est ouverte tandis que la communication e2 entre la zone de dépression du deuxième cylindre et le volume environnant l'extrémité du corps opposée à celle dotée du clapet est coupée.

La zone de dépression du premier cylindre central communique alors avec la zone de dépression du deuxième cylindre périphérique. En revanche, la zone de dépression du deuxième cylindre périphérique ne communique plus avec le volume V environnant l'extrémité du corps opposée à celle dotée du clapet.

Lorsque le piston plongeur monte, les joints de dosage J1 et J93 étant étanches lorsqu'ils s'éloignent du clapet, le joint J1 active la zone de dépression du premier cylindre en abaissant la pression, ce qui génère une aspiration du produit de dosage. De manière concomitante, le joint J93 active la zone de dépression du deuxième cylindre en abaissant la pression, ce qui génère aussi une aspiration du produit de dosage puisque les zones de dépression communiquent via la lumière e1. En revanche, il n'y a pas d'aspiration de l'eau circulant au travers de la machine hydraulique M, puisque la communication est fermée. Rappelons en effet que le mécanisme de dosage, et en particulier le volume V environnant l'extrémité du corps opposée à celle dotée du clapet, communiquent avec la partie motrice, c'est-à-dire avec la machine hydraulique.

Lorsque le piston plongeur descend, le joint J93 devient passant, permettant ainsi au produit de dosage de le traverser et d'accéder au volume V. Le produit de dosage contenu à l'intérieur du premier cylindre central traverse quant à lui le joint en V J91.

A titre indicatif, l'invention doit pouvoir couvrir une gamme dosage s'étendant de 1 à 10%. Il est dès lors possible de définir un premier sous-ensemble de dosage couvrant la gamme de dosage allant de 3 à 10%, avec un diamètre de corps doseur de 34,5 mm et un deuxième sous-ensemble de dosage de diamètre de corps doseur de 18 mm pour couvrir la gamme de dosage allant de 1 à 3%.

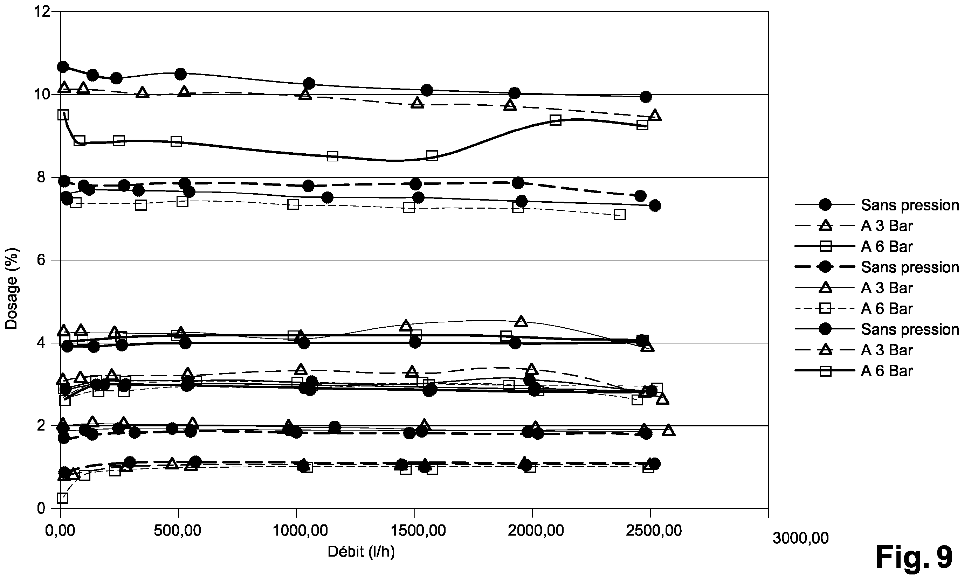

La figure 9 présente des résultats d'essais sur toute la gamme de dosage allant de 1 à 10%, dans des conditions de pressions de 0, 3 et 6 bars et avec des variations de débits allant de 0 à 2500 I / heure.

On constate à chaque fois que les écarts de dosage sont contenus dans les +/- 10% de la valeur nominale.

Dans le cas où le sélecteur comporte sur sa surface extérieure un premier marquage et un deuxième marquage, le premier marquage et/ou le deuxième marquage est (sont) associé(s) à des moyens de détection de manière à déterminer dans quelle position se trouve le sélecteur. Ainsi, et tel que représenté sur les figures 10a et 10b, il est possible de ménager par exemple un aimant 63 à l'intérieur du sélecteur, cet aimant étant associé à la première position, et donc au premier marquage. Ainsi, dans le cas où la pompe est utilisée sous le contrôle d'un dispositif de monitoring, ledit dispositif peut déterminer la position de l'aimant, et par conséquent celle du sélecteur. Si l'aimant constitue un moyen de détection robuste et peu coûteux, il est également possible d'utiliser d'autres moyens tels qu'une étiquette RFID.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Mécanisme de dosage comprenant un corps doseur (10) monté en translation dans une chemise (3) elle-même montée dans une douille de réglage (4), ladite douille de réglage étant apte à coopérer en vissage avec ladite chemise, le vissage/dévissage entraînant en translation le corps doseur, ledit corps étant dotée en l'une de ses extrémité d'un clapet (11) d'obturation et accueillant en l'autre de ses extrémités un piston plongeur (9) dont le mouvement alternatif en translation permet une aspiration au niveau de l'extrémité du corps dotée du clapet (11) puis une expulsion dans un volume (V) environnant l'autre extrémité du corps via un passage pratiqué dans au moins une étanchéité (J1, J93, J91), **caractérisé en ce que** :
- le corps doseur comporte un premier cylindre central (101) et un deuxième cylindre périphérique (102) concentriques et solidaires entre eux,
- le piston plongeur est solidaire d'une première (J1) et d'une deuxième étanchéité (J93), montées respectivement en appui contre le premier et le deuxième cylindres, de sorte qu'il se créé une zone de dépression à l'intérieur respectivement du premier et du deuxième cylindres, lorsque la première et la deuxième étanchéité (J1; J93) s'éloignent de l'extrémité du corps dotée du clapet,
- la zone de dépression du premier cylindre central peut être mise en communication avec la zone de dépression du deuxième cylindre périphérique, et, la zone de dépression du deuxième cylindre périphérique peut être mise en communication avec un volume (V) environnant l'extrémité du corps opposée à celle dotée du clapet,
- le mécanisme de dosage comprend un sélecteur (6) monté sur le premier cylindre central et mobile par rapport à ce dernier suivant une course délimitée par une première position dans laquelle la communication (e1) entre les zones de dépression des premier et deuxième cylindres est coupée tandis que la communication (e2) entre la zone de dépression du deuxième cylindre et le volume environnant l'extrémité du corps opposée à celle dotée du clapet est ouverte, et une deuxième position dans laquelle la communication (e1) entre les zones de dépression des premier et deuxième cylindres est ouverte tandis que la communication (e2) entre la zone de dépression du deuxième cylindre et le volume environnant l'extrémité du corps opposée à celle dotée du clapet est coupée.

2. Mécanisme de dosage selon la revendication 1, **caractérisé en ce que** la communication permettant l'expulsion dans le volume (V) environnant l'extrémité du corps opposée à celle dotée du clapet est réalisée au moins au niveau de la deuxième étanchéité (J93), ladite étanchéité étant un joint rendu passant lorsque le piston plongeur se rapproche du clapet.

3. Mécanisme de dosage selon la revendication 1 ou 2, **caractérisé en ce que** la communication permettant l'expulsion dans le volume environnant l'extrémité du corps opposée à celle dotée du clapet est réalisée au moins au niveau d'un joint à lèvre (J91) monté sur le piston plongeur (9), ledit joint étant passant lorsque le piston plongeur se rapproche du clapet.

4. Mécanisme de dosage selon l'une quelconques des revendications précédentes, **caractérisé en ce que** le piston plongeur comprend une tige (90) prolongée par un troisième cylindre (91) intercalé entre le premier cylindre central (101) et le deuxième cylindre périphérique (102), la deuxième étanchéité (J93) étant montée sur la surface circonférentielle extérieure du troisième cylindre.

5. Mécanisme de dosage selon la revendication précédente, **caractérisé en ce que** la première étanchéité (J1) est montée sur la surface circonférentielle intérieure du troisième cylindre.

6. Mécanisme de dosage selon la revendication 4, **caractérisé en ce que** la première étanchéité (J1) est montée sur un prolongement de la tige (90) du piston plongeur de manière à venir en appui contre la surface circonférentielle intérieure du premier cylindre central (101).

7. Mécanisme de dosage selon l'une quelconque des revendications précédentes, **caractérisé en ce que** la communication (e2) entre la zone de dépression du deuxième cylindre périphérique et le volume environnant l'extrémité du corps opposée à celle dotée du clapet, est réalisée par au moins un canal (102c) creusé dans l'épaisseur du deuxième cylindre périphérique et reliant ladite zone de dépression et ledit volume.

8. Mécanisme de dosage selon l'une quelconque des revendications 1 à 6, **caractérisé en ce que** la communication (e2) entre la zone de dépression du deuxième cylindre périphérique et le volume environnant l'extrémité du corps opposée à celle dotée du clapet, est réalisée par l'interstice délimité par deux tubes emboîtés (102a, 102b) constituant le deuxième cylindre périphérique (102).

9. Mécanisme de dosage selon l'une quelconque des revendications précédentes, **caractérisé en ce que** la communication (e1) entre les zones de dépression des premier et deuxième cylindres, est réalisée avec au moins une lumière percée dans l'épaisseur du premier cylindre central.

10. Mécanisme de dosage selon l'une quelconque des revendications précédentes, **caractérisé en ce que** la première et la deuxième position bornant la course du sélecteur sont respectivement définies par des surfaces de butées ménagées sur des moyens de blocage (5) de la douille de réglage (4) et un écrou d'assemblage (7).

11. Mécanisme de dosage selon la revendication 10, **caractérisé en ce que** le sélecteur (6) est monté en translation le long du premier cylindre central et est un écrou coopérant en vissage/dévissage avec une zone filetée réalisée sur la surface circonférentielle extérieure du premier cylindre central,
de sorte que la première position dans laquelle la communication (e1) entre les zones de dépression des premier et deuxième cylindres est coupée tandis que la communication (e2) entre la zone de dépression du deuxième cylindre et le volume environnant l'extrémité du corps opposée à celle dotée du clapet est ouverte, correspond à la position vissée de l'écrou,
et de sorte que la deuxième position dans laquelle la communication (e1) entre les zones de dépression des premier et deuxième cylindres est ouverte tandis que la communication (e2) entre la zone de dépression du deuxième cylindre et le volume environnant l'extrémité du corps opposée à celle dotée du clapet est coupée, correspond à la position dévissée de l'écrou.

12. Mécanisme de dosage selon la revendication 10, **caractérisé en ce que** le sélecteur (6) est une bague montée suivant une liaison glissière sur le premier cylindre central.

13. Mécanisme de dosage selon la revendication 10, **caractérisé en ce que** le sélecteur (6) est un dispositif comprenant une soupape (60) et un joint commandés manuellement par la rotation d'une bague suivant une course s'étendant de préférence sur un demi-tour, ladite soupape mettant en communication à l'une des extrémités de la course les zones de dépression des premier et deuxième cylindres tandis que le joint ferme la communication entre la zone de dépression du deuxième cylindre et le volume environnant l'extrémité du corps opposée à celle dotée du clapet, ladite bague inversant les mises en communication à l'autre extrémité de sa course.

14. Mécanisme de dosage selon la revendication 10, **caractérisé en ce que** le sélecteur (6) est un dispositif comprenant un tiroir hydraulique (61) en translation, une fente (62) et un joint, le tiroir mettant en communication à l'une des extrémités de sa course les zones de dépression des premier et deuxième cylindres via la fente tandis que le joint ferme la communication entre la zone de dépression du deuxième cylindre et le volume environnant l'extrémité du corps opposée à celle dotée du clapet, ledit tiroir inversant les mises en communication à l'autre extrémité de sa course.

15. Mécanisme de dosage selon l'une quelconque des revendications précédentes, **caractérisé en ce que** le sélecteur comporte sur sa surface extérieure un premier et un deuxième marquages correspondant respectivement à la première et à la deuxième position bornant la course du sélecteur.

16. Mécanisme de dosage selon la revendication précédente, **caractérisé en ce que** le premier marquage et/ou le deuxième marquage est (sont) associé(s) à des moyens de détection (63) de manière à déterminer dans quelle position se trouve le sélecteur.

17. Pompe à dosage proportionnel comprenant une machine hydraulique (M) dotée d'une entrée (E) et d'une sortie (S), et un mécanisme de dosage (D) communiquant en l'une de ses extrémités avec une tubulure (1) d'accès à une chambre de mélange intérieure à la pompe et en l'autre de ses extrémités avec un réservoir de produit à doser, la machine hydraulique s'étendant suivant un axe longitudinal (Z) et renfermant un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage jusque dans la chambre de mélange avec ouverture d'un clapet d'aspiration (11) lorsque l'organe s'éloigne du mécanisme de dosage puis une expulsion en sortie de la pompe avec fermeture du clapet d'aspiration lorsque l'organe se rapproche du mécanisme de dosage, **caractérisée en ce que** le mécanisme de dosage est conforme à l'une quelconque des revendications 1 à 16.

18. Procédé de mise en œuvre d'une pompe à dosage proportionnel selon la revendication 17, le sélecteur comportant sur sa surface extérieure un premier et un deuxième marquages correspondant respectivement à la première et à la deuxième position bornant la course du sélecteur, elles même correspondant respectivement à des valeurs de dosage comprises entre X% et Y% et à des valeurs de dosage comprises entre Y% et Z%, Y étant compris entre X et Z, la chemise du mécanisme de dosage comportant une graduation correspondant à des valeurs de dosage, **caractérisé en ce que** le procédé comprend :
- une étape de sélection de la plage de dosage (X% - Y%) ou (Y% - Z%) en positionnant le sélecteur dans l'une ou l'autre des première et deuxième positions bornant la course du sélecteur,
- puis une étape de sélection de la valeur de dosage, en réglant la douille (4) sur le dosage choisi.

## Patentansprüche

1. Dosiermechanismus mit einem Dosiererkörper (10), der verschiebbar in einem Zylinder (3) angebracht ist, welcher seinerseits in einer Stellhülse (4) angebracht ist, wobei die Stellhülse geeignet ist, durch Schrauben mit dem Zylinder zusammenzuwirken, wobei das Einschrauben/Ausschrauben den Dosiererkörper translatorisch antreibt, wobei der Körper an einem seiner Enden mit einem Sperrventil (11) versehen ist und an dem anderen seiner Enden einen Kolben (9) aufnimmt, dessen hin und her gehende Translationsbewegung ein Ansaugen an dem mit dem Sperrventil (11) versehenen Ende des Körpers und anschließend ein Austreiben in ein das andere Ende des Körpers umgebendes Volumen (V) über einen in mindestens einer Dichteinrichtung (J1, J93, J91) ausgebildeten Durchlass ermöglicht, **dadurch gekennzeichnet, dass**:
- der Dosiererkörper einen ersten, mittigen Zylinder (101) und einen zweiten, peripheren Zylinder (102) aufweist, die in Bezug zueinander konzentrisch und fest miteinander verbunden sind,
- der Kolben fest mit einer ersten (J1) und einer zweiten Dichteinrichtung (J93) verbunden ist, die jeweils derart in Anlage an dem ersten und dem zweiten Zylinder angebracht sind, dass sich eine Unterdruckzone im Inneren jeweils des ersten und des zweiten Zylinders bildet, wenn sich die erste und die zweite Dichteinrichtung (J1; J93) von dem mit dem Sperrventil versehenen Ende des Körpers entfernen,
- die Unterdruckzone des ersten, mittigen Zylinders mit der Unterdruckzone des zweiten, peripheren Zylinders verbindbar ist, und die Unterdruckzone des zweiten, peripheren Zylinders mit einem Volumen (V) verbindbar ist, welches das Ende des Körpers umgibt, das demjenigen entgegengesetzt ist, das mit dem Sperrventil versehen ist,
- der Dosiermechanismus eine Wahleinrichtung (6) aufweist, die an dem ersten, mittigen Zylinder angebracht ist und in Bezug auf Letzteren über einen Hub bewegbar ist, der durch eine erste Position, in welcher die Verbindung (e1) zwischen den Unterdruckzonen des ersten und des zweiten Zylinders unterbrochen ist, während die Verbindung (e2) zwischen der Unterdruckzone des zweiten Zylinders und dem Volumen, welches das Ende des Körpers umgibt, das demjenigen entgegengesetzt ist, das mit dem Sperrventil versehen ist, offen ist, und eine zweite Position begrenzt ist, in welcher die Verbindung (e1) zwischen den Unterdruckzonen des ersten und des zweiten Zylinders offen ist, während die Verbindung (e2) zwischen der Unterdruckzone des zweiten Zylinders und dem Volumen, welches das Ende des Körpers umgibt, das demjenigen entgegengesetzt ist, das mit dem Sperrventil versehen ist, unterbrochen ist.

2. Dosiermechanismus nach Anspruch 1, **dadurch gekennzeichnet, dass** die Verbindung, welche das Austreiben in das Volumen (V), welches das Ende des Körpers umgibt, das demjenigen entgegengesetzt ist, das mit dem Sperrventil versehen ist, ermöglicht, zumindest an der zweiten Dichteinrichtung (J93) ausgebildet ist, wobei die Dichteinrichtung eine Dichtung ist, die während der Annäherung des Kolbens an das Sperrventil durchlässig wird.

3. Dosiermechanismus nach Anspruch 1 oder 2, **dadurch gekennzeichnet, dass** die Verbindung, welche das Austreiben in das Volumen (V), welches das Ende des Körpers umgibt, das demjenigen entgegengesetzt ist, das mit dem Sperrventil versehen ist, ermöglicht, zumindest an einer Lippendichtung (J91) ausgebildet ist, welche an dem Kolben (9) angebracht ist, wobei die Dichtung während der Annäherung des Kolbens an das Sperrventil durchlässig ist.

4. Dosiermechanismus nach einem der vorhergehenden Ansprüche, **dadurch gekennzeichnet, dass** der Kolben eine Stange (90) aufweist, die durch einen dritten Zylinder (91) verlängert ist, der zwischen dem ersten, mittigen Zylinder (101) und dem zweiten, peripheren Zylinder (102) angeordnet ist, wobei die zweite Dichteinrichtung (J93) an der Außenumfangsfläche des dritten Zylinders angebracht ist.

5. Dosiermechanismus nach einem der vorhergehenden Ansprüche, **dadurch gekennzeichnet, dass** die erste Dichteinrichtung (J1) an der Innenumfangsfläche des dritten Zylinders angebracht ist.

6. Dosiermechanismus nach Anspruch 4, **dadurch gekennzeichnet, dass** die erste Dichteinrichtung (J1) an einer Verlängerung der Stange (90) des Kolbens derart angebracht ist, dass sie an der Innenumfangsfläche des ersten, mittigen Zylinders (101) anliegt.

7. Dosiermechanismus nach einem der vorhergehenden Ansprüche, **dadurch gekennzeichnet, dass** die Verbindung (e2) zwischen der Unterdruckzone des zweiten, peripheren Zylinders und dem Volumen, welches das Ende des Körpers umgibt, das demjenigen entgegengesetzt ist, das mit dem Sperrventil versehen ist, durch mindestens einen Kanal (102c) gebildet ist, der in der Dicke des zweiten, peripheren Zylinders vertieft ist und die genannte Unterdruckzone und das genannte Volumen verbindet.

8. Dosiermechanismus nach einem der Ansprüche 1 bis 6, **dadurch gekennzeichnet, dass** die Verbindung (e2) zwischen der Unterdruckzone des zweiten, peripheren Zylinders und dem Volumen, welches das Ende des Körpers umgibt, das demjenigen entgegengesetzt ist, das mit dem Sperrventil versehen ist, durch den Zwischenraum gebildet ist, welcher durch zwei ineinander gesetzte Rohre (102a, 102b) begrenzt ist, welche den zweiten, peripheren Zylinder (102) bilden.

9. Dosiermechanismus nach einem der vorhergehenden Ansprüche, **dadurch gekennzeichnet, dass** die Verbindung (e1) zwischen den Unterdruckzonen des ersten und des zweiten Zylinders mittels mindestens einer in der Dicke des ersten, mittigen Zylinders gebohrten Öffnung gebildet ist.

10. Dosiermechanismus nach einem der vorhergehenden Ansprüche, **dadurch gekennzeichnet, dass** die erste und die zweite Position, welche den Hub der Wahleinrichtung begrenzen, jeweils durch Anschlagflächen definiert sind, welche an Sperreinrichtungen (5) der Stellhülse (4) und einer Montagemutter (7) vorgesehen sind.

11. Dosiermechanismus nach Anspruch 10, **dadurch gekennzeichnet, dass** die Wählvorrichtung (6) entlang dem ersten, mittigen Zylinder verschiebbar angebracht ist und eine Mutter ist, die durch Schrauben/Lösen mit einer Gewindezone zusammenwirkt, die an der Außenumfangsfläche des ersten, mittigen Zylinders ausgebildet ist,
derart, dass die erste Position, in welcher die Verbindung (e1) zwischen den Unterdruckzonen des ersten und des zweiten Zylinders unterbrochen ist, während die Verbindung (e2) zwischen der Unterdruckzone des zweiten Zylinders und dem Volumen, welches das Ende des Körpers umgibt, das demjenigen entgegengesetzt ist, das mit dem Sperrventil versehen ist, offen ist, der eingeschraubten Position der Mutter entspricht,
und derart, dass die zweite Position, in welcher die Verbindung (e1) zwischen den Unterdruckzonen des ersten und des zweiten Zylinders offen ist, während die Verbindung (e2) zwischen der Unterdruckzone des zweiten Zylinders und dem und dem Volumen, welches das Ende des Körpers umgibt, das demjenigen entgegengesetzt ist, das mit dem Sperrventil versehen ist, unterbrochen ist, der ausgeschraubten Position der Mutter entspricht.

12. Dosiermechanismus nach Anspruch 10, **dadurch gekennzeichnet, dass** die Wählvorrichtung (6) ein Ring ist, der entlang einer Gleitverbindung an dem ersten, mittigen Zylinder angebracht ist.

13. Dosiermechanismus nach Anspruch 10, **dadurch gekennzeichnet, dass** die Wählvorrichtung (6) eine Vorrichtung mit einem Ventil (60) und einer Dichtung ist, die durch das Drehen eines Rings entlang eines Hubs manuell gesteuert werden, der sich vorzugsweise über eine halbe Umdrehung erstreckt, wobei das Ventil an einem der Enden des Hubs die Unterdruckzonen des ersten und des zweiten Zylinders miteinander verbinden, während die Dichtung die Verbindung zwischen der Unterdruckzone des zweiten Zylinders und dem Volumen, welches das Ende des Körpers umgibt, das demjenigen entgegengesetzt ist, das mit dem Sperrventil versehen ist, am anderen Ende des Hubs schließt.

14. Dosiermechanismus nach Anspruch 10, **dadurch gekennzeichnet, dass** die Wählvorrichtung (6) eine Vorrichtung mit einem verschiebbaren (Hydraulikschieber (61), einem Spalt (62) und einer Dichtung ist, wobei der Schieber an einem der Enden seines Hubs die Unterdruckzonen des ersten und des zweiten Zylinders über den Spalt verbindet, während die Dichtung die Verbindung zwischen der Unterdruckzone des zweiten Zylinders und dem Volumen, welches das Ende des Körpers umgibt, das demjenigen entgegengesetzt ist, das mit dem Sperrventil versehen ist, schließt, wobei der Schieber die Verbindungen am anderen Ende seines Hubs umkehrt.

15. Dosiermechanismus nach einem der vorhergehenden Ansprüche, **dadurch gekennzeichnet, dass** die Wählvorrichtung auf ihrer Außenfläche eine erste und eine zweite Markierung aufweist, die jeweils der ersten beziehungsweise der zweiten Begrenzungsposition des Hubs der Wählvorrichtung entsprechen.

16. Dosiermechanismus nach einem der vorhergehenden Ansprüche, **dadurch gekennzeichnet, dass** die erste und/oder die zweite Markierung Detektionseinrichtungen (63) zugeordnet ist (sind), um zu bestimmen, an welcher Position sich die Wählvorrichtung befindet.

17. Proportional-Dosierpumpe mit einer hydraulischen Maschine (M), die mit einem Einlass (E) und einem Auslass (S) sowie einem Dosiermechanismus (D), der an einem seiner Enden mit einem Zugangsrohr (1) zu einer Mischkammer im Inneren der Pumpe und an dem anderen seiner Enden mit einem Reservoir für das zu dosierende Produkt verbunden ist, versehen ist, wobei die hydraulische Maschine sich entlang einer Längsachse (Z) erstreckt und ein Organ einschließt, das geeignet ist, eine hin und her gehende Bewegung zu bewirken, wobei die Versorgung der Pumpe mit Flüssigkeit am Einlass (40) die hin und her gehende Bewegung des Organs auslöst, wobei diese Bewegung abwechselnd ein Ansaugen über den Dosiermechanismus aus der Mischkammer unter Öffnen eines Ansaugklappenventils (11) bewirkt, wenn sich das Organ von dem Dosierungsmechanismus entfernt, und anschließend ein Austreiben am Auslass der Pumpe unter Schließen des Ansaugventils bewirkt, wenn das Organ sich dem Dosiermechanismus nähert, **dadurch gekennzeichnet, dass** der Dosiermechanismus einem der Ansprüche 1 bis 16 entspricht.

18. Verfahren zum Betreiben einer Proportional-Dosierpumpe nach Anspruch 17, wobei die Wählvorrichtung auf ihrer Außenfläche eine erste und eine zweite Markierung aufweist, die jeweils der ersten beziehungsweise der zweiten Begrenzungsposition des Hubs der Wählvorrichtung entsprechen, wobei diese wiederum jeweils Dosierungswerten zwischen X% und Y% und Dosierungswerten zwischen Y% und Z% entsprechen, wobei der Zylinder des Dosiermechanismus eine Dosierungswerten entsprechende Skala aufweist, **dadurch gekennzeichnet, dass** das Verfahren aufweist:
- einen Schritt des Wählens des Dosierungsbereichs (X% - Y%) oder (Y% - Z%) durch Positionieren der Wählvorrichtung an der einen oder der anderen der ersten beziehungsweise der zweiten Begrenzungspositionen des Hubs der Wählvorrichtung,
- anschließend einen Schritt des Wählens des Dosierungswerts durch Einstellen der Hülse (4) auf die gewählte Dosis.

## Claims

1. A metering mechanism comprising a metering body (10) mounted to move in translation in a jacket (3) itself mounted in an adjusting sleeve (4), said adjusting sleeve being adapted to cooperate by way of a screwing movement with said sleeve, screwing/unscrewing driving the metering body in translation, said body being provided at one of its ends with a shut-off check valve (11) and accepting at the other of its ends a plunger piston (9) the alternating movement in translation of which enables suction at the level of the end of the body provided with the check valve (11) and then expulsion into a volume (V) surrounding the other end of the body via a passage formed in at least one sealing device (J1, J93, J91), **characterized in that**:
- the metering body includes a central first cylinder (101) and a peripheral second cylinder (102) that are concentric and fastened to one another,
- the plunger piston is fastened to a first sealing device (J1) and a second sealing device (J93) respectively mounted to bear against the first and second cylinders, so that a reduced pressure zone is created inside the first and second cylinders, respectively, when the first and second sealing devices (J1; J93) are moved away from the end of the body provided with the check valve,
- the reduced pressure zone of the central first cylinder is adapted to be caused to communicate with the reduced pressure zone of the peripheral second cylinder and the reduced pressure zone of the peripheral second cylinder being adapted to be caused to communicate with a volume (V) surrounding the end of the body opposite that provided with the check valve,
- the metering mechanism comprises a selector (6) mounted on the central first cylinder and mobile relative thereto over a stroke delimited by a first position in which the communication (e1) between the reduced pressure zones of the first and second cylinders is cut off while the communication (e2) between the reduced pressure zone of the second cylinder and the volume surrounding the end of the body opposite that provided with the check valve is open and a second position in which the communication (e1) between the reduced pressure zones of the first and second cylinders is open while the communication (e2) between the reduced pressure zone of the second cylinder and the volume surrounding the end of the body opposite that provided with the valve is cut off.

2. The metering mechanism as claimed in claim 1, **characterized in that** the communication enabling expulsion into the volume (V) surrounding the end of the body opposite that provided with the check valve is provided at least at the level of the second sealing device (J93), said sealing device being a seal opened when the plunger piston moves toward the check valve.

3. The metering mechanism as claimed in claim 1 or 2, **characterized in that** the communication enabling expulsion into the volume surrounding the end of the body opposite that provided with the check valve is provided at least at the level of a lip seal (J91) mounted on the plunger piston (9), said seal being open when the plunger piston moves toward the check valve.

4. The metering mechanism as claimed in any one of the preceding claims, **characterized in that** the plunger piston comprises a rod (90) extended by a third cylinder (91) between the central first cylinder (101) and the peripheral second cylinder (102), the second sealing device (J93) being mounted on the exterior circumferential surface of the third cylinder.

5. The metering mechanism as claimed in the preceding claim, **characterized in that** the first sealing device (J1) is mounted on the interior circumferential surface of the third cylinder.

6. The metering mechanism as claimed in claim 4, **characterized in that** the first sealing device (J1) is mounted on an extension of the rod (90) of the plunger piston so as to come to bear against the interior circumferential surface of the central first cylinder (101).

7. The metering mechanism as claimed in any one of the preceding claims, **characterized in that** the communication (e2) between the reduced pressure zone of the peripheral second cylinder and the volume surrounding the end of the body opposite that provided with the check valve is provided by at least one channel (102c) hollowed out within the thickness of the peripheral second cylinder and connecting said reduced pressure zone and said volume.

8. The metering mechanism as claimed in any one of claims 1 to 6, **characterized in that** the communication (e2) between the reduced pressure zone of the peripheral second cylinder and the volume surrounding the end of the body opposite that provided with the check valve is produced by the interstice delimited by two nested tubes (102a, 102b) constituting the peripheral second cylinder (102).

9. The metering mechanism as claimed in any one of the preceding claims, **characterized in that** the communication (e1) between the reduced pressure zones of the first and second cylinders is produced by means of at least one opening within the thickness of the central first cylinder.

10. The metering mechanism as claimed in any one of the preceding claims, **characterized in that** the first and second positions delimiting the stroke of the selector are respectively defined by abutment surfaces formed on means (5) for immobilizing the adjusting sleeve (4) and an assembly nut (7).

11. The metering mechanism as claimed in claim 10, **characterized in that** the selector (6) is mounted to move in translation along the central first cylinder and is a nut cooperating with a screwing/unscrewing movement with a threaded zone produced on the exterior circumferential surface of the central first cylinder,
so that the first position in which the communication (e1) between the reduced pressure zones of the first and second cylinders is cut off while the communication (e2) between the reduced pressure zone of the second cylinder and the volume surrounding the end of the body opposite that provided with the check valve is open corresponds to the screwed in position of the nut,
and so that the second position in which the communication (e1) between the reduced pressure zones of the first and second cylinders is open while the communication (e2) between the reduced pressure zone of the second cylinder and the volume surrounding the end of the body opposite that provided with the check valve is cut off corresponds to the screwed out position of the nut.

12. The metering mechanism as claimed in claim 10, **characterized in that** the selector (6) is a ring mounted on the central first cylinder with a sliding connection.

13. The metering mechanism as claimed in claim 10, **characterized in that** the selector (6) is a device comprising a relief valve (60) and a seal that are controlled manually by the rotation of a ring over a stroke preferably extending over one half-turn, said relief valve establishing communication at one of the ends of the stroke between the reduced pressure zones of the first and second cylinders while the seal shuts off the communication between the reduced pressure zone of the second cylinder and the volume surrounding the end of the body opposite that provided with the check valve, and vice versa at the other end of the stroke of said ring.

14. The metering mechanism as claimed in claim 10, **characterized in that** the selector (6) is a device comprising a hydraulic slide (61) mobile in translation, a slot (62) and a seal, the slide establishing communication at one of the ends of its stroke between the reduced pressure zones of the first and second cylinders via the slot while the seal shuts off the communication between the reduced pressure zone of the second cylinder and the volume surrounding the end of the body opposite that provided with the check valve, and vice versa at the other end of the stroke of said slide.

15. The metering mechanism as claimed in any one of the preceding claims, **characterized in that** the selector includes on its exterior surface first and second markings respectively corresponding to the first and second positions delimiting the stroke of the selector.

16. The metering mechanism as claimed in the preceding claim, **characterized in that** the first and/or second markings are associated with detection means (63) in such a manner as to determine the position of the selector.

17. A proportioning pump comprising a hydraulic machine (M) provided with an inlet (E) and an outlet (S), and a metering mechanism (D) communicating at one of its ends with an access tube (1) to an interior mixing chamber of the pump and at the other of its ends with a reservoir of product to be metered, the hydraulic machine extending along a longitudinal axis (Z) and enclosing a member adapted to effect an alternating movement, the feeding of the pump with liquid at the inlet triggering the alternating movement of the member, which movement alternately brings about suction via the metering mechanism into the mixing chamber with opening of a suction check valve (11) when the member moves away from the metering mechanism and then expulsion at the outlet of the pump with closure of the suction check valve when the member moves toward the metering mechanism, **characterized in that** the metering mechanism is as claimed in any one of claims 1 to 16.

18. A method of using a proportioning pump as claimed in claim 17, the selector including on its exterior surface first and second markings respectively corresponding to the first and second positions delimiting the stroke of the selector, themselves respectively corresponding to metering values between X% and Y% inclusive and to metering values between Y% and Z% inclusive, Y lying between X and Z, the jacket of the metering mechanism including a graduation corresponding to metering values, **characterized in that** the method comprises:
- a step of selection of the metering range (X% - Y%) or (Y% - Z%) by positioning the selector in one or the other of the first and second positions delimiting the stroke of the selector,
- and then a step of selection of the metering value by adjusting the sleeve (4) to the chosen metering value.
